# EUROPEAN PATENT APPLICATION

(11) **EP 4 852 117 A1**
(43) Date of publication of application: **09.12.2026**
(21) Application number: 25895815.6
(22) Date of filing: 21.11.2025
(51) Int. Cl.: H01M 10/052, H01M 4/62, H01M 4/525, H01M 4/505, H01M 4/587, H01M 4/02

(54) **SECONDARY BATTERY**

(30) Priority: 25.11.2024 KR 20240169577; 20.11.2025 KR 20250176613
(71) Applicant: LG Energy Solution, Ltd., Seoul 07335 (KR)
(72) Inventor: NOH, Suk In, Daejeon 34122 (KR); KIM, Ji Hyun, Daejeon 34122 (KR); LIM, Soo Hyun, Daejeon 34122 (KR); SEONG, Eun Kyu, Daejeon 34122 (KR)
(74) Representative: Hoffmann Eitle
(86) International application number: PCT/KR2025/019391
(87) International publication number: WO 2026/111471

(57) **Abstract**

The present disclosure relates to a secondary battery. The secondary battery has a configuration in which an excess of a point-type conductive material is applied to the negative electrode, and the ratio of the irreversible capacity of the positive electrode to the irreversible capacity of the negative electrode is adjusted to a predetermined ratio. By having such a configuration, the secondary battery not only has excellent energy density and power output performance, but also has the advantage of having high safety since it has an outstanding effect of suppressing heat generation of the secondary battery during high-rate charge and discharge.

## Description

### [Technical Field]

The present disclosure relates to a secondary battery with excellent power output characteristics.

This application claims the benefit of priority from Korean Patent Application No. 10-2024-0169577, filed on November 25, 2024, and Korean Patent Application No. 10-2025-0176613 filed on November 20, 2025, the entire contents disclosed therein are incorporated by reference into this disclosure.

### [Background]

Lithium secondary batteries have been widely applied not only to small devices such as portable electronic devices but also to medium and large-sized devices such as battery packs for hybrid vehicles or electric vehicles, and power storage devices.

Recently, the demand for lithium secondary batteries is also increasing as a power source for Urban Air Mobility (UAM), which is a next-generation means of transportation, beyond electric vehicles and portable electronic devices. Urban Air Mobility (UAM) should provide aerial services in complex urban environments. Therefore, it should be designed to enable vertical takeoff and landing in order to minimize the operational space, and high safety is also required to enhance social acceptance for commercialization. In particular, since various complex variables such as collisions with high-rise buildings and structures, low-altitude turbulence, and weather changes such as precipitation act on the operation of Urban Air Mobility (UAM), the lithium secondary battery serving as the power source should also be designed in preparation for emergency situations that deviate from normal flight conditions.

However, since research on lithium secondary batteries has been conducted mainly for electric vehicle applications until now, the performance required for Urban Air Mobility (UAM), specifically, the power output conditions in consideration of landing in emergency situations, have not been satisfied. Therefore, it is necessary to develop technology for lithium secondary batteries for Urban Air Mobility (UAM).

### [Summary]

### [Technical Problem]

An object of the present disclosure is to provide a secondary battery with excellent energy density and power output performance.

### [Technical Solution]

In order to solve the above-described problem,
The present disclosure provides:
a secondary battery comprising a positive electrode, a negative electrode, and a separator disposed between the positive electrode and the negative electrode,
wherein the positive electrode comprises a positive electrode active layer comprising a positive electrode active material and a positive electrode additive on a positive electrode current collector,
wherein the negative electrode comprises a negative electrode active layer comprising a negative electrode active material and a point-type conductive material on a negative electrode current collector, and
wherein, when charge and discharge are performed at 22±5°C and 5C-rate, a ratio of the irreversible capacity of the negative electrode to the irreversible capacity of the positive electrode satisfies a range of 0.8 to 1.2.

Specifically, when charge and discharge are performed at 22±5°C and 5C-rate, the secondary battery may satisfy a range in which the ratio of the irreversible capacity of the negative electrode to the irreversible capacity of the positive electrode is 0.9 to 1.15.

In this case, in the negative electrode, the content of the point-type conductive material may be in a range of 10 wt.% to 60 wt.% based on the total weight of the negative electrode active layer.

The point-type conductive material may comprise acetylene black, oil furnace black, channel black, lamp black, thermal black, or a mixture thereof.

The average particle diameter (D₅₀) of the point-type conductive material may be in a range of 0.5 µm to 20 µm.

The negative electrode active material may comprise natural graphite, artificial graphite, Kish graphite, pyrolytic carbon, carbon microbeads, mesophase pitch, graphitized coke, or a mixture thereof.

The negative electrode active material may be at least one silicon-based negative electrode active material selected from silicon (Si), silicon carbide (SiC), and silicon oxide (SiO_{q}, where 0.8≤q≤2.5).

In addition, in the positive electrode, the positive electrode active material may comprise at least one lithium metal oxide represented by the following Chemical Formulas 1 and 2:

[Chemical Formula 1] Liₐ[Ni_{b}Co_{1-b-c}M¹_{c}]O₂

[Chemical Formula 2] Liₚ[Mn_{2-q}M²_{q}]O₄

(In Chemical Formula 1 and Chemical Formula 2,
M¹ is at least one element selected from W, Cu, Fe, V, Cr, Mn, Al, Mg, Ca, Ti, Zr, Zn, In, Ta, Y, La, Sr, Ga, Sc, Gd, Sm, Ce, Nb, B, and Mo,
M² is at least one element selected from W, Cu, Fe, V, Cr, Ni, Al, Mg, Ca, Ti, Zr, Zn, In, Ta, Y, La, Sr, Ga, Sc, Gd, Sm, Ce, Nb, B, and Mo, and
a, b, c, p, and q satisfy 1.0≤a≤1.30, 0≤b<1, 0≤c≤0.4, 1.0≤p≤1.30, and 0≤q≤1.0, respectively).

The positive electrode additive may comprise at least one compound represented by the following Chemical Formula 3 to Chemical Formula 5:

[Chemical Formula 3] LiₘM³₍₁₋ₙ₎M⁴ₙO₄

[Chemical Formula 4] Li₂M⁵₍₁₋ᵣ₎M⁶ᵣO₂

[Chemical Formula 5] Li₂R_{z}

(In Chemical Formula 3 to Chemical Formula 5,
M³ is Fe, Co, Mn, Zn, Al, or Ga,
M⁴ is at least one metal selected from W, Cu, Fe, V, Cr, Ti, Zr, Zn, Co, Al, In, Ta, Y, La, Sr, Ga, Sc, Gd, Sm, Ca, Ce, Nb, Mg, B, and Mo, provided that M³ and M⁴ comprise mutually different metals,
M⁵ is Ni or Cu,
M⁶ is at least one metal selected from W, Cu, Fe, V, Cr, Ti, Zr, Zn, Co, Al, In, Ta, Y, La, Sr, Ga, Sc, Gd, Sm, Ca, Ce, Nb, Mg, B, and Mo, provided that M⁵ and M⁶ comprise mutually different metals,
R is O, S, or Se, and
m, n, r, and z satisfy 4≤m≤7, 0≤n≤0.5, 0<r≤0.5, and 0.8≤z≤2.5, respectively).

For example, the positive electrode additive may comprise at least one compound selected from Li₅FeO₄, Li₆MnO₄, Li₆CoO₄, Li₆ZnO₄, Li₅AlO₄, Li₅GaO₄, Li₂NiO₂, Li₂CuO₂, Li₂O, Li₂O₂, Li₂S, and Li₂Se.

The content of the positive electrode additive may be in a range of 0.1 wt.% to 5 wt.% based on the total weight of the positive electrode active layer.

### [Advantageous Effects]

The secondary battery according to the present disclosure is not only excellent in energy density and power output performance, but also has an advantage of having high safety since it has an outstanding effect of suppressing heat generation of the secondary battery during high-rate discharge.

### [Detailed Description]

The present disclosure may have various modifications and various aspects, and specific aspects will be described in detail in the following detailed description.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In the present specification, "comprising as a main component" may mean comprising the defined component in an amount of 50 wt.% or more (or 50 vol.% or more), 60 wt.% or more (or 60 vol.% or more), 70 wt.% or more (or 70 vol.% or more), 80 wt.% or more (or 80 vol.% or more), 90 wt.% or more (or 90 vol.% or more), or 95 wt.% or more (or 95 vol.% or more) based on the total weight (or total volume). For example, "comprising carbon atoms as a main component" may mean comprising 50 wt.% or more, 60 wt.% or more, 70 wt.% or more, 80 wt.% or more, 90 wt.% or more, or 95 wt.% or more carbon atoms based on the total weight of the carbon-based compound. In some cases, it may also mean that the entire carbon-based compound is composed of carbon atoms, comprising 100 wt.%.

In addition, in this specification, "average particle diameter (D₅₀)" means a particle diameter at which a cumulative value becomes 50% in a particle diameter distribution of particles, and is also referred to as median diameter. The average particle diameter can be measured by a method conventionally applied in the art. For example, the average particle diameter may be measured using a laser diffraction scattering particle size distribution analyzer or a centrifugal particle size distribution analyzer. In the present disclosure, it may be a value measured by an analytical instrument using a laser diffraction scattering particle size distribution measurement method. For example, the average particle diameter may be measured by dispersing the relevant particles in a dispersion medium, introducing them into a commercially available laser diffraction particle size analyzer (for example, Microtrac S-3500), irradiating ultrasonic waves of approximately 28 kHz at an output of 60 W, obtaining a volume cumulative particle size distribution graph, and determining the particle diameter at the point where the volume cumulative amount is 50% in the obtained volume cumulative particle size distribution graph.

In the present disclosure, a "primary particle" refers to a particle unit in which no grain boundary is apparently present when observed at a magnification of 5,000 to 20,000 times using a scanning electron microscope (SEM). From this perspective, a "secondary particle" refers to a particle formed by agglomeration of a plurality of primary particles, and when observed at a magnification of 5,000 to 20,000 times using a scanning electron microscope (SEM), one or more grain boundaries are apparently observed. The "grain boundary" refers to an interface existing between grains (or single particles).

In the present disclosure, the "average particle diameter of primary particles" refers to the arithmetic mean value calculated after measuring the particle diameters of at least 20 or more primary particles observed in a scanning electron microscope image. The particle diameter in this case refers to the diameter of the longest axis of the primary particle.

In the present disclosure, a "secondary particle" is a particle formed by agglomeration of a plurality of primary particles. In the present disclosure, in order to distinguish from conventional secondary particles formed by agglomeration of tens to hundreds of primary particles, a secondary particle in which 30 or fewer primary particles are agglomerated will be referred to as a quasi-single particle.

In the present specification, "irreversible capacity" refers to the deviation between the charge amount and the discharge amount of an active material, and "irreversible efficiency" may be expressed as (charge amount - discharge amount) / charge amount.

Hereinafter, the present disclosure will be described in more detail.

### Secondary Battery

The present disclosure provides:
a secondary battery comprising a positive electrode, a negative electrode, and a separator disposed between the positive electrode and the negative electrode,
wherein the positive electrode comprises a positive electrode active layer comprising a positive electrode active material and a positive electrode additive on a positive electrode current collector,
wherein the negative electrode comprises a negative electrode active layer comprising a negative electrode active material and a point-type conductive material on a negative electrode current collector, and
wherein, when charge and discharge are performed at 22±5°C and 5C-rate, a ratio of the irreversible capacity of the negative electrode to the irreversible capacity of the positive electrode satisfies a range of 0.8 to 1.2.

The secondary battery according to the present disclosure may be a lithium secondary battery. The secondary battery comprises a positive electrode, a negative electrode, and a separator disposed between the positive electrode and the negative electrode. More specifically, the secondary battery comprises an electrode assembly comprising a positive electrode and a negative electrode and a separator disposed therebetween, and the electrode assembly may be inserted into a battery case together with an electrolyte composition and have a sealed form. In this case, the electrode assembly may have a stacked form, a stack-folding form, or a form wound in a jelly-roll shape. Since the electrode assembly of this form exhibits high energy density within a limited space, it has the advantage of being highly applicable in terms of the energy density and power output of the secondary battery.

In addition, the positive electrode may have a structure in which a positive electrode active layer comprising a positive electrode active material and a positive electrode additive is provided on at least one surface of a positive electrode current collector.

In this case, the positive electrode active material is a material capable of causing an electrochemical reaction, and may comprise at least one lithium metal compound represented by the following Chemical Formulas 1 and 2, which allows reversible intercalation and deintercalation of lithium ions:

[Chemical Formula 1] Liₐ[Ni_{1-b-c}Co_{b}M¹_{c}]O₂

[Chemical Formula 2] Liₚ[Mn_{2-q}M²_{q}]O₄

in Chemical Formula 1 and Chemical Formula 2,
M¹ is at least one element selected from W, Cu, Fe, V, Cr, Mn, Al, Mg, Ca, Ti, Zr, Zn, In, Ta, Y, La, Sr, Ga, Sc, Gd, Sm, Ce, Nb, B, and Mo,
M² is at least one element selected from W, Cu, Fe, V, Cr, Ni, Al, Mg, Ca, Ti, Zr, Zn, In, Ta, Y, La, Sr, Ga, Sc, Gd, Sm, Ce, Nb, B, and Mo, and
a, b, c, p, and q satisfy 1.0≤a≤1.30, 0≤b≤1, 0≤c≤0.4, 1.0≤p≤1.30, and 0≤q≤1.0, respectively.

The lithium metal oxide represented by Chemical Formula 1 is a compound having a layered crystal structure, and is easily stored with lithium ions and has a high lithium ion diffusion rate, so it is applied as a positive electrode active material for high-capacity/high-output secondary batteries. The lithium metal oxide represented by Chemical Formula 1 is a metal oxide comprising nickel (Ni) and/or cobalt (Co) together with lithium, and may in some cases have a form in which another transition metal (M¹) is doped. For example, the metal oxide may comprise at least one selected from LiCoO₂, LiNiO₂, Li(Ni_{0.6}Co_{0.1}Mn_{0.3})O₂, Li(Ni_{0.6}Co_{0.2}Mn_{0.2})O₂, Li(Ni_{0.7}Co_{0.15}Mn_{0.15})O₂, Li(Ni_{0.8}Co_{0.1}Mn_{0.1})O₂, Li(Ni_{0.9}Co_{0.05}Mn_{0.05})O₂, Li(Ni_{0.6}Co_{0.2}Mn_{0.1}Zr_{0.1})O₂, Li(Ni_{0.6}Co_{0.2}Mn_{0.15}Zr_{0.05})O₂, Li(Ni_{0.7}Co_{0.1}Mn_{0.1}Zr_{0.1})O₂, Li(Ni_{0.6}Co_{0.2}Al_{0.2})O₂, Li(Ni_{0.6}Co_{0.2}Al_{0.2})O₂, Li(Ni_{0.7}Co_{0.15}Al_{0.15})O₂, Li(Ni_{0.8}Co_{0.1}Al_{0.1})O₂, Li(Ni_{0.9}Co_{0.05}Al_{0.05})O₂, Li(Ni_{0.6}Co_{0.2}Al_{0.1}Zr_{0.1})O₂, Li(Ni_{0.6}Co_{0.2}Al_{0.15}Zr_{0.05})O₂, and Li(Ni_{0.7}Co_{0.1}Al_{0.1}Zr_{0.1})O₂.

In addition, the lithium metal oxide represented by Chemical Formula 2 has a spinel crystal structure that is easily observed in general metal oxides. The spinel crystal structure contains various three-dimensional channels internally, which facilitates the insertion of lithium ions, and thus has the characteristic of excellent power output. The lithium metal oxide represented by Chemical Formula 2 is a metal oxide comprising manganese (Mn), and may in some cases have a form in which another transition metal (M²) is doped. For example, the lithium metal oxide may comprise at least one selected from LiMn₂O₄, LiMn_{1.7}Al_{0.3}O₄, and LiMn_{1.5}Al_{0.5}O₄.

The positive electrode active material may have the form of primary particles and/or secondary particles. Specifically, the positive electrode active material may consist of primary particles, or may have a form in which secondary particles, in which some primary particles are agglomerated, are mixed with primary particles at a predetermined ratio. In this case, the proportion of the secondary particles may be in a range of 0% or more and 50% or less among all positive electrode active material particles, and specifically may be in a range of 1% to 50%; 1% to 30%; 1% to 20%; 1% to 10%; 5% to 50%; 10% to 50%; 20% to 50%; 30% to 50%; 5% to 20%; 10% to 30%; 20% to 40%; or 15% to 40%. The proportion may be calculated from an image obtained during optical microscope or scanning electron microscope (SEM) analysis of the cross-section of the positive electrode active layer. For example, it can be confirmed by obtaining a scanning electron microscope (SEM) image of the cross-section of the positive electrode active layer, performing image analysis on the obtained image to distinguish particles comprising grain boundaries from particles not comprising grain boundaries, and then calculating the area ratio of each particle in the entire image. That is, the proportion may refer to the area ratio calculated through image analysis.

The positive electrode active material having the form of primary particles is economical since no separate process for particle agglomeration is required during manufacture. In addition, since no grain boundary exists within the particles, stress concentration is low and the structural strength of the particles themselves is high, so particle cracking due to repeated charge and discharge rarely occurs. This may act as a factor that increases the lifespan of the positive electrode. Furthermore, the positive electrode active material in the form of primary particles has no or significantly low grain boundary resistance generated at grain boundaries during charge and discharge. A positive electrode active material with low grain boundary resistance exhibits a fast lithium ion diffusion rate, and thus has the advantage of increased power output performance. In particular, when the positive electrode active material represented by Chemical Formula 1 has the form of secondary particles, the structural stability of the particles is low during high-voltage or high-rate charging, which may induce side reactions with the electrolyte. In this case, since gas is generated due to the side reactions, there is a limitation in that the thermal safety of the secondary battery is reduced.

The positive electrode additive contained in the positive electrode active layer is an over-lithiated compound having a high irreversible capacity, and thus can play a role in controlling the irreversible capacity of the positive electrode. Such a positive electrode additive may comprise any one alone or two or more of the compounds represented by the following Chemical Formula 3 to Chemical Formula 5:

[Chemical Formula 3] LiₘM³₍₁₋ₙ₎M⁴ₙO₄

[Chemical Formula 4] Li₂M⁵₍₁₋ᵣ₎M⁶ᵣO₂

[Chemical Formula 5] Li₂R_{z}

In Chemical Formula 3 to Chemical Formula 5,
M³ is Fe, Co, Mn, Zn, Al, or Ga,
M⁴ is at least one metal selected from W, Cu, Fe, V, Cr, Ti, Zr, Zn, Co, Al, In, Ta, Y, La, Sr, Ga, Sc, Gd, Sm, Ca, Ce, Nb, Mg, B, and Mo, provided that M³ and M⁴ comprise mutually different metals,
M⁵ is Ni or Cu,
M⁶ is at least one metal selected from W, Cu, Fe, V, Cr, Ti, Zr, Zn, Co, Al, In, Ta, Y, La, Sr, Ga, Sc, Gd, Sm, Ca, Ce, Nb, Mg, B, and Mo, provided that M⁵ and M⁶ comprise mutually different metals,
R is O, S, or Se, and
m, n, r, and z satisfy 4≤m≤7, 0≤n≤0.5, 0<r≤0.5, and 0.8≤z≤2.5, respectively.

The positive electrode additive contains an excess of lithium and can supply lithium to compensate for lithium consumption caused by irreversible chemical and physical reactions at the negative electrode during initial charging. The positive electrode, which has been supplied with lithium from the positive electrode additive, has an increased charge capacity and a decreased irreversible capacity, so the lifespan characteristics and power output characteristics of the secondary battery comprising the same can be improved.

The positive electrode additive may comprise at least one of the over-lithiated compounds represented by Chemical Formulas 1 to 3. In this case, the compound represented by Chemical Formula 1 may comprise Li₆CoO₄, Li₆Co_{0.5}Zn_{0.5}O₄, Li₆Co_{0.7}Zn_{0.3}O₄, Li₆Co_{0.7}Zn_{0.2}Al_{0.1}O₄, Li₅FeO₄, Li₆MnO₄, Li₆ZnO₄, Li₅AlO₄, Li₅GaO₄, and the like. In addition, the compound represented by Chemical Formula 2 may comprise Li₂NiO₂, Li₂CuO₂, and the like, and the compound represented by Chemical Formula 3 may comprise Li₂O₂, Li₂O, Li₂S, Li₂Se, and the like.

In general, a positive electrode active material has a specific charge and discharge potential depending on the composition constituting the positive electrode active material. Therefore, the positive electrode additive may be selectively used from among those in which the potential required to release lithium is within the charge and discharge potential of the secondary battery, specifically within the charge and discharge potential range of the positive electrode active material. For example, when the positive electrode active material comprises a lithium metal oxide represented by Chemical Formula 1 having a charging potential of approximately 3.8 V or more, compounds represented by Chemical Formula 3, such as Li₆CoO₄, Li₆Co_{0.5}Zn_{0.5}O₄, Li₆Co_{0.7}Zn_{0.3}O₄, Li₆Co_{0.7}Zn_{0.2}Al_{0.1}O₄, and the like may be applied as the positive electrode additive.

The irreversible capacity of the positive electrode may be controlled by the content and average particle diameter (D₅₀) of the positive electrode additive, but is not limited thereto.

For example, the positive electrode additive may be comprised in a content in a range of 0.1 wt.% to 5 wt.% based on the total weight of the positive electrode active layer. For example, the positive electrode additive may be comprised in a content in a range of 0.1 wt.% to 4 wt.%; 0.1 wt.% to 3 wt.%; 0.1 wt.% to 2 wt.%; 0.1 wt.% to 1 wt.%; 1 wt.% to 5 wt.%; 2.5 wt.% to 5 wt.%; 1 wt.% to 4 wt.%; 1 wt.% to 3 wt.%; 0.5 wt.% to 2 wt.%; 2 wt.% to 4 wt.%; 0.5 wt.% to 1.3 wt.%; or 0.5 wt.% to 0.9 wt.% based on the total weight of the positive electrode active layer. The present disclosure can prevent a decrease in the charge and discharge capacity due to an insufficient supplementation of lithium ions lost through irreversible reactions caused by a low content of the positive electrode additive, by controlling the content of the positive electrode additive within the above range. In addition, it is possible to prevent a large amount of oxygen gas from being generated during charge and discharge of the secondary battery due to an excessive amount of the positive electrode additive.

The positive electrode additive may have a predetermined average particle diameter (D₅₀) in consideration of the irreversible reactivity of the compound during initial charging. Specifically, the positive electrode additive may have an average particle diameter (D₅₀) in a range of 0.5 µm to 20 µm. For example, the positive electrode additive may have an average particle diameter (D₅₀) in a range of 0.5 µm to 18 µm; 0.5 µm to 15 µm; 0.5 µm to 12 µm; 0.5 µm to 10 µm; 0.5 µm to 5 µm; 0.5 µm to 3 µm; 1 µm to 9 µm; 5 µm to 20 µm; 5 µm to 15 µm; 5 µm to 13 µm; 8 µm to 19 µm; 9 µm to 15 µm; 10 µm to 20 µm; 10 µm to 15 µm; 7 µm to 14 µm; or 8 µm to 12 µm.

The present disclosure can prevent a substantial amount of unreacted compound from remaining after initial charge and discharge/activation due to an average particle diameter larger than the upper limit described above, by controlling the average particle diameter (D₅₀) of the positive electrode additive within the above-described range. The compound remaining after initial charge and discharge/activation may act as a factor that generates gas while releasing lithium ions during subsequent charge and discharge processes. The gas thus generated may increase the internal pressure of the secondary battery, thereby compromising the safety of the secondary battery. Therefore, it is preferable to control the average particle diameter (D₅₀) to be equal to or below the above-described upper limit so that all or most of the positive electrode additive can participate in the irreversible reaction during initial charge and discharge/activation. In addition, the present disclosure can minimize the amount of positive electrode additive lost due to scattering during manufacture of the positive electrode or failing to be uniformly dispersed in the positive electrode active layer due to an average particle diameter (D₅₀) smaller than the above-described lower limit.

The negative electrode, like the positive electrode, comprises a negative electrode active layer on at least one surface of a negative electrode current collector. The negative electrode active layer refers to a layer that implements the electrical activity of the negative electrode. Such a negative electrode active layer is manufactured by applying a negative electrode slurry comprising a negative electrode active material that implements electrochemical oxidation-reduction reactions during charge and discharge of the battery onto at least one surface of a negative electrode current collector, and then drying and rolling the same.

The negative electrode comprises a negative electrode active material as the main component of the negative electrode active layer. Specifically, the negative electrode active layer may comprise a negative electrode active material in an amount of 35 wt.% to 99.8 wt.% based on the total weight. For example, the negative electrode active layer may comprise a negative electrode active material in an amount of 35 wt.% or more, 45 wt.% or more, 50 wt.% or more, 60 wt.% or more, 70 wt.% or more, 80 wt.% or more, 95 wt.% or more, 98 wt.% or more, 84 wt.% to 99.8 wt.%, 90 wt.% to 99.8 wt.%, 94 wt.% to 99.8 wt.%, 88 wt.% to 96 wt.%, or 92 wt.% to 97.5 wt.% based on the total weight.

The negative electrode active material may comprise a carbon-based negative electrode active material and/or a silicon-based negative electrode active material as a main component.

The carbon-based negative electrode active material is a material comprising carbon atoms as a main component, and may comprise natural graphite, artificial graphite, Kish graphite, pyrolytic carbon, carbon microbeads, mesocarbon microbead fired carbon using tar and pitch as raw materials, and graphitized coke, or a mixture thereof.

The carbon-based negative electrode active material may have the form of an assembly in which a plurality of particles are granulated. Specifically, the carbon-based negative electrode active material may have the form of secondary particles composed of a plurality of primary particles. In this case, one graphite assembly may be formed by assembling 2 to 100, preferably 3 to 20, graphite particles.

For example, the carbon-based negative electrode active material may comprise natural graphite. The natural graphite has the advantage of excellent price competitiveness and outstanding lifespan characteristics when applied as a negative electrode.

In addition, the carbon-based negative electrode active material may comprise natural graphite and artificial graphite, and the artificial graphite in this case may have the form of a graphite assembly in which 10 to 30 particles are agglomerated. In addition, the mixing ratio of the natural graphite and artificial graphite may be 50 to 95:5 to 50, 70 to 95:5 to 30, 5 to 50:50 to 95, or 5 to 30:70 to 95 by weight. By comprising the carbon-based negative electrode active material in the above mixing ratio of natural graphite and artificial graphite, it is possible to firmly secure the adhesion between the negative electrode current collector and the negative electrode active layer while achieving high power output performance of the negative electrode active layer.

The carbon-based negative electrode active material may have an average particle diameter satisfying a predetermined range. Specifically, the carbon-based negative electrode active material may have an average particle diameter (D₅₀) in a range of 0.5 µm to 20 µm. For example, the carbon-based negative electrode active material may have an average particle diameter (D₅₀) in a range of 0.5 µm to 15 µm; 0.5 µm to 10 µm; 5 µm to 20 µm; 10 µm to 20 µm; 12 µm to 18 µm; 2 µm to 7 µm; 0.5 µm to 5 µm; or 11 µm to 15 µm. As the average particle diameter of the carbon-based negative electrode active material decreases, the degree of disorder in the expansion direction for each particle is maximized, thereby reducing the expansion of the negative electrode active layer due to the insertion of lithium ions during charging. However, when the particle diameter of the carbon-based negative electrode active material is less than 0.5 µm, the energy density of the negative electrode may be reduced because a large amount of binder is required due to the increase in the number of particles per unit volume. On the other hand, when the maximum particle diameter exceeds 20 µm, the expansion of the negative electrode active layer during charging may become severe. In this case, as charge and discharge of the secondary battery are repeated, the adhesion between the particles included in the negative electrode active layer and the adhesion between the particles and the current collector deteriorate, so the cycle characteristics of the secondary battery may be significantly reduced.

The silicon-based negative electrode active material is a material comprising silicon (Si) as a main component and can increase the charge and discharge capacity of the negative electrode. Examples of such silicon-based negative electrode active materials include silicon (Si), silicon carbide (SiC), silicon monoxide (SiO), and silicon dioxide (SiO₂), and these may be comprised alone or in combination of two or more in the negative electrode active layer. When silicon monoxide (SiO) and silicon dioxide (SiO₂) as the silicon-based negative electrode active material are uniformly mixed or composited and comprised in the negative electrode active layer, they may be expressed as silicon oxide (SiO_{q}, where 0.8≤q≤2.5).

In addition, the silicon-based negative electrode active material may be doped with or form an alloy with Li, Mg, Al, Ca, or Ti, and the like. In addition, when the silicon-based negative electrode active material contains oxygen (O), it may be surface-treated with a carbon coating layer or the like on the surface, or composited with carbon particles, for the purpose of suppressing volume expansion during charging and simultaneously improving the electrical conductivity of the negative electrode active material.

Since the silicon-based negative electrode active material is a negative electrode active material with a large irreversible capacity, the content, average particle diameter, and the like may be appropriately controlled in order to adjust the ratio of the irreversible capacities of the positive electrode and negative electrode to a predetermined range.

For example, the silicon-based negative electrode active material may be comprised in a range of 0.1 to 40 wt.% based on the total weight of the negative electrode active layer. Specifically, the silicon-based negative electrode active material may be comprised in a range of 0.5 to 20 wt.%, 1 to 9 wt.%, 5 to 15 wt.%, 3 to 7 wt.%, 11 to 19 wt.%, 13 to 17 wt.%, 15 to 20 wt.%, 10 to 30 wt.%, 20 to 40 wt.%, 25 to 35 wt.%, 15 to 25 wt.%, or 9 to 22 wt.% based on the total weight of the negative electrode active layer. The present disclosure can improve the charge capacity per unit mass while reducing lithium consumption and irreversible capacity loss during initial charge and discharge of the secondary battery, by controlling the content ratio of the silicon-based negative electrode active material comprised in the negative electrode active layer within the above range. Specifically, when the content ratio of the silicon-based negative electrode active material exceeds the above-described upper limit, there is a problem in that the irreversible capacity of the negative electrode increases markedly, reducing the power output of the secondary battery and increasing the amount of heat generated during high-rate discharge. In addition, when the content ratio of the silicon-based negative electrode active material satisfies the above-described range, the volume change of the negative electrode active layer due to the insertion of lithium ions during charging of the secondary battery can be minimized, thereby extending the lifespan of the secondary battery.

The negative electrode may comprise an excess of a point-type conductive material in the negative electrode active layer. The point-type conductive material refers to a conductive material having a sphericity of 0.7 or more, wherein the sphericity represents the ratio of the shortest diameter (minor axis) to the longest diameter (major axis) among any diameters passing through the center of the particle in a two-dimensional projection of the conductive material particle. Specifically, the point-type conductive material may have a sphericity with a lower limit of 0.75 or more, 0.8 or more, 0.85 or more, 0.9 or more, or 0.95 or more; and an upper limit of 1.0 or less, 0.95 or less, 0.9 or less, 0.85 or less, or 0.8 or less. For example, the point-type conductive material may have a sphericity in a range of 0.7 to 1.0; 0.7 to 0.95; 0.7 to 0.9; 0.8 to 1.0; 0.85 to 1.0; 0.90 to 1.00; 0.90 to 0.99; 0.92 to 0.98; 0.95 to 0.99; 0.92 to 0.97; 0.95 to 0.98; or greater than 0.90 and less than 1.0. When the sphericity is 1, the particle may have a spherical shape. The sphericity may be determined by measuring through a particle shape analyzer, or by measuring the particle shape using an optical microscope, a scanning electron microscope (SEM), an energy dispersive spectrometer, or the like, and then analyzing the measured results.

In general, when a linear conductive material is used in the negative electrode active layer, the electrical conductivity of the negative electrode can be increased through a conductive network formed between the linear conductive materials. However, in this case, the linear conductive material obstructs the pathway along which lithium ions move, and may rather deteriorate the power output performance and/or charging performance of the negative electrode. On the other hand, the point-type conductive material can reduce the resistance of the negative electrode active layer without impeding the movement of lithium ions and the like within the negative electrode active layer.

In addition, the point-type conductive material can play a role in increasing the power output of the secondary battery by participating in the intercalation and deintercalation process of lithium ions induced within the negative electrode active layer during charge and discharge, thereby assisting the power output of the negative electrode. Examples of such point-type conductive materials include carbon blacks such as acetylene black, oil furnace black, channel black, lamp black, thermal black, or mixtures thereof.

The point-type conductive material may have an average particle diameter (D₅₀) controlled within a predetermined range. Specifically, the average particle diameter (D₅₀) of the point-type conductive material may be in a range of 0.5 µm to 20 µm. For example, the average particle diameter (D₅₀) of the point-type conductive material may be in a range of 1 µm to 20 µm; 5 µm to 20 µm; 10 µm to 20 µm; 11 µm to 19 µm; 8 µm to 15 µm; 15 µm to 20 µm; 13 µm to 19 µm; 14 µm to 17 µm; 5 µm to 8 µm; 0.5 µm to 15 µm; 0.5 µm to 10 µm; 0.5 µm to 8 µm; 0.5 µm to 5 µm; 0.5 µm to 3 µm; 0.5 µm to 1 µm; 5 µm to 10 µm; 1 µm to 5 µm; 0.5 µm to 4.5 µm; 0.5 µm to 3 µm; 1 µm to 4.5 µm; 1 µm to 3 µm; or 0.8 µm to 1.8 µm. The present disclosure can suppress the heat generation phenomenon during high-rate discharge of the secondary battery while achieving a high energy density of the negative electrode active layer, by controlling the average particle diameter (D₅₀) of the point-type conductive material within the above-described range.

In addition, the point-type conductive material may be comprised in an excess amount in the negative electrode active layer. Specifically, the point-type conductive material may be in a range of 10 wt.% to 60 wt.% based on the total weight of the negative electrode active layer. For example, the point-type conductive material may be in a range of 15 wt.% to 60 wt.%; 20 wt.% to 60 wt.%; 25 wt.% to 60 wt.%; 30 wt.% to 60 wt.%; 35 wt.% to 60 wt.%; 40 wt.% to 60 wt.%; 45 wt.% to 60 wt.%; 10 wt.% to 50 wt.%; 10 wt.% to 40 wt.%; 10 wt.% to 30 wt.%; 10 wt.% to 20 wt.%; 20 wt.% to 40 wt.%; 30 wt.% to 60 wt.%; 50 wt.% to 60 wt.%; 11 wt.% to 55 wt.%; 11 wt.% to 25 wt.%; 21 wt.% to 55 wt.%; 21 wt.% to 45 wt.%; or 35 wt.% to 55 wt.% based on the total weight of the negative electrode active layer. The present disclosure can achieve a high energy density of the secondary battery by controlling the content of the point-type conductive material within the above-described range. In addition, it is possible to prevent the heat generation at the negative electrode from markedly increasing during high-rate discharge of the secondary battery when the content of the point-type conductive material exceeds the above-described upper limit. Furthermore, it is possible to prevent a decrease in the power output of the secondary battery that occurs when the content of the point-type conductive material is less than the above-described lower limit.

Meanwhile, among high-power secondary batteries, a secondary battery for Urban Air Mobility (UAM) must have the capability to deliver high power output for a certain period of time or more at a low state of charge (SOC), so that the Urban Air Mobility (UAM) can land safely even in emergency situations. In this regard, as mentioned above, the point-type conductive material can reduce the resistance of the negative electrode active layer without impeding the movement of lithium ions and the like within the negative electrode active layer. This reduction in resistance of the negative electrode active layer can function to compensate for the power output performance of the secondary battery under low state of charge (SOC) conditions. As an example, when a secondary battery with a state of charge (SOC) of 35% is discharged for 15 seconds under a constant power condition of approximately 900 W, and then discharged to a state of charge (SOC) of 0% under a constant power condition of approximately 1,000 W, the time required may be 10 seconds or more, 20 seconds or more, or 30 seconds or more. In this case, the upper limit voltage may be 4.2 V and the lower limit voltage may be 2.5 V.

The fact that the secondary battery can be driven for 10 seconds or more at an output of 1,000 W or more at a state of charge (SOC) of 35% or less means that a landing time of 10 seconds or more can be secured even in a battery out (BO) state in which one of the batteries is discharged. Specifically, discharging to a state of charge (SOC) of 35% refers to battery operation during the cruise process before the Urban Air Mobility (UAM) cruises and prepares for landing, i.e., cruise before transition. In addition, the process of discharging for 15 seconds under the constant power condition of 900 W refers to the transition process of switching to landing mode after cruising. Finally, subsequently driving at an output of 1,000 W or more refers to the landing process. The ability to perform all of these processes means that the minimum power output conditions required during the landing process of the Urban Air Mobility (UAM) are satisfied. Therefore, it can be seen that the secondary battery of the present disclosure is suitable as a secondary battery for Urban Air Mobility.

Furthermore, the positive electrode and negative electrode comprised in the secondary battery may satisfy a predetermined range for their irreversible capacity ratio. Specifically, when charge and discharge are performed on each of the positive electrode and negative electrode at 22±5°C and 5C-rate, the secondary battery may satisfy a range in which the ratio of the irreversible capacity of the negative electrode to the irreversible capacity of the positive electrode is 0.8 to 1.2. For example, when charge and discharge are performed on each of the positive electrode and negative electrode under a constant current condition of 22±5°C and 5C-rate, the secondary battery may satisfy a ratio of the irreversible capacity of the negative electrode to the irreversible capacity of the positive electrode in a range of 0.8 to 1.15; 0.8 to 1.12; 0.8 to 1.1; 0.8 to 1.05; 0.85 to 1.2; 0.85 to 1.15; 0.85 to 1.12; 0.9 to 1.2; 0.9 to 1.15; or 0.9 to 1.12. The ratio of the irreversible capacities of the negative electrode and positive electrode may be controlled by adjusting the components and/or contents comprised in each active layer of the negative electrode and positive electrode, but is not limited thereto.

An increase in the irreversible capacity in an electrode means that the discharge capacity used relative to the charge capacity of the electrode decreases, which in turn leads to a reduction in the power output of the secondary battery. Accordingly, the present disclosure can achieve a high level of energy density and power output characteristics of the secondary battery by controlling the ratio of the irreversible capacities of the negative electrode and positive electrode within the above-described range. In addition, a secondary battery in which the ratio of the irreversible capacities of the negative electrode and positive electrode is controlled within the above-described range has an excellent effect of suppressing heat generation during high-rate discharge. Therefore, the secondary battery according to the present disclosure may be suitable for high-power secondary batteries such as Urban Air Mobility (UAM) that require high energy density and high power output performance along with high thermal safety.

Meanwhile, the secondary battery according to the present disclosure may comprise a positive electrode having a high energy density so as to be suitable for high-power secondary batteries such as Urban Air Mobility (UAM). For example, the positive electrode comprised in the secondary battery may have an energy density of 250 Wh/kg or more, preferably 270 Wh/kg or more, and more preferably 280 Wh/kg or more. Although a higher energy density of the positive electrode is preferable since it can exhibit higher energy with less weight, taking into consideration the difficulty in meeting the power output conditions as the loading of the positive electrode increases to achieve a high energy density, and the limitation on the proportion that the battery can occupy in the weight of the aircraft, it may be 320 Wh/kg or less. In this case, the "energy density of the positive electrode" may be measured by placing an electrode assembly, in which a 15 µm-thick polyethylene-based separator is interposed between the positive electrode and a lithium metal as the negative electrode, inside a battery case, and then injecting an electrolyte solution in which 1 M LiPF₆ is dissolved in a mixed organic solvent comprising ethylene carbonate and ethyl methyl carbonate mixed at a volume ratio of 3:7 into the case to manufacture a coin half-cell. Specifically, the energy density of the positive electrode was recorded as the value obtained by charging the coin half-cell at 25°C under constant current/constant voltage conditions of 0.33C to 4.25 V, then discharging at a constant current of 0.33C until reaching 3.0 V, multiplying the initial discharge capacity (Ah) of the secondary battery thus obtained by the average discharge voltage, and then dividing by the weight (kg) of the coin half-cell.

In addition, the negative electrode active layer of the negative electrode may have a thickness and/or loading amount within a predetermined range. Since the negative electrode active layer comprises a negative electrode active material that exhibits electrochemical activity during charge and discharge of the secondary battery, the thickness of the negative electrode active layer may increase when the content of the negative electrode active material is increased in order to increase the charge and discharge capacity of the negative electrode. However, when the thickness of the negative electrode active layer becomes excessively thick, it is not only difficult to control the crystal plane orientation of the carbon-based negative electrode active material comprised in the negative electrode active layer, but also the volume change due to the intercalation and deintercalation of lithium ions during charge and discharge increases, so the lifespan of the negative electrode may be significantly reduced. Accordingly, the present disclosure can control the average thickness of the negative electrode active layer within a range of 50 µm to 500 µm. For example, the average thickness of the negative electrode active layer may be controlled within a range of 50 µm to 450 µm; 50 µm to 300 µm; 100 µm to 450 µm; 100 µm to 400 µm; 100 µm to 350 µm; 100 µm to 300 µm; 100 µm to 250 µm; 100 µm to 200 µm; 150 µm to 400 µm; 200 µm to 450 µm; 300 µm to 500 µm; 150 µm to 300 µm; 150 µm to 250 µm; or 150 µm to 220 µm.

The present disclosure can prevent a decrease in the charge and discharge capacity of the negative electrode due to an average thickness of the negative electrode active layer lower than the lower limit of the above-described range, by controlling the average thickness of the negative electrode active layer within the above-described range. In addition, it is possible to prevent a decrease in power output performance due to an increase in the electrical resistance of pores comprised inside the negative electrode active layer caused by an average thickness of the negative electrode active layer greater than the upper limit of the above-described range.

In addition, the present disclosure can control the average loading amount of the negative electrode active layer within a range of 250 mg/25 cm² to 700 mg/25 cm². For example, the average loading amount of the negative electrode active layer may be 300 mg/25 cm² to 700 mg/25 cm²; 400 mg/25 cm² to 700 mg/25 cm²; 500 mg/25 cm² to 700 mg/25 cm²; 250 mg/25 cm² to 500 mg/25 cm²; 250 mg/25 cm² to 350 mg/25 cm²; 300 mg/25 cm² to 550 mg/25 cm²; 450 mg/25 cm² to 650 mg/25 cm²; 300 mg/25 cm² to 600 mg/25 cm²; or 300 mg/25 cm² to 450 mg/25 cm². The present disclosure can maintain the average loading amount of the negative electrode active layer at or above the above-described lower limit. In this case, since both the energy density and the power output performance of the negative electrode can be achieved at a high level, it can be easily applied to devices requiring high power output such as Urban Air Mobility (UAM). In addition, the present disclosure can prevent an increase in the volume change generated at the negative electrode due to lithium intercalation during charge and discharge of the secondary battery and a decrease in the diffusion capability of lithium ions, by maintaining the loading amount of the negative electrode active layer at or below the above-described upper limit.

Furthermore, each of the positive electrode and negative electrode may further comprise a binder, a conductive material, other additives, and the like together with the active material in each active layer (i.e., the positive electrode active layer and the negative electrode active layer).

For example, the positive electrode and the negative electrode may comprise a binder in each active layer for fixing each component comprised in each active layer and for achieving adhesion with the current collector. The binder may be one that has adhesiveness and is electrochemically stable. Examples of such binders include styrene-butadiene rubber (SBR), butadiene rubber (BR), nitrile-butadiene rubber (NBR), styrene-butadiene-styrene block polymer (SBS), styrene-ethylene-butadiene block polymer (SEB), styrene-(styrene-butadiene)-styrene block polymer, natural rubber (NR), isoprene rubber (IR), ethylenepropylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethyl(meth)acrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol, or combinations thereof.

The binder may be comprised in an amount of 0.1 to 5 wt.% based on the total weight of the positive electrode active layer or the negative electrode active layer. For example, the binder may be comprised in an amount of 0.1 to 4 wt.%; 2 to 4 wt.%; 1.5 to 5 wt.%; 1 to 3 wt.%; 0.1 to 2 wt.%; or 0.1 to 1 wt.% based on the total weight of the positive electrode active layer or the negative electrode active layer.

In addition, in the case of the positive electrode, a separate conductive material may be further comprised in the positive electrode active layer. Since the lithium metal oxide comprised as the main component of the positive electrode active layer generally does not have high electrical conductivity, a conductive material may be comprised in the positive electrode active layer for the purpose of increasing electrical conductivity.

The conductive material may include graphite; carbon blacks such as acetylene black, channel black, furnace black, lamp black, and thermal black; carbon nanostructures such as carbon nanotubes and graphene; conductive fibers such as carbon fibers and metal fibers; metal powders such as carbon fluoride, aluminum powder, and nickel powder; conductive whiskers such as zinc oxide and potassium titanate; conductive metal oxides such as titanium oxide; and conductive materials such as polyphenylene derivatives. These may be used alone or in combination.

The conductive material may be comprised in an amount of 0.1 to 5 wt.% based on the total weight of the positive electrode active layer. For example, the conductive material may be comprised in an amount of 0.1 to 4 wt.%; 2 to 4 wt.%; 1.5 to 5 wt.%; 1 to 3 wt.%; 0.1 to 2 wt.%; or 0.1 to 1 wt.% based on the total weight of the positive electrode active layer.

Each current collector of the positive electrode and the negative electrode may comprise a metal with high conductivity, and is not particularly limited as long as the active layer of each electrode can be easily adhered thereto and the current collector has no reactivity within the voltage range of the battery. For the current collector, for example, stainless steel, aluminum, nickel, titanium, fired carbon, or aluminum or stainless steel surface-treated with carbon, nickel, titanium, silver, or the like may be used. In addition, the current collector may generally have a thickness of 3 µm to 500 µm, and fine irregularities may be formed on the surface of the current collector to increase the adhesion of the active material. For example, it may be used in various forms such as films, sheets, foils, nets, porous bodies, foams, and non-woven fabrics.

In addition, the separator interposed between the positive electrode and the negative electrode of the secondary battery is an insulating thin film having high ion permeability and mechanical strength, and is not particularly limited as long as it is one commonly used in the art. Specifically, the separator may comprise at least one polymer selected from chemically resistant and hydrophobic polypropylene; polyethylene; and polyethylene-propylene copolymer. The separator may have the form of a porous polymer substrate such as a sheet or non-woven fabric comprising the above-described polymer, and in some cases may have the form of a composite separator in which organic or inorganic particles are coated on the porous polymer substrate with an organic binder. In addition, the separator may have an average pore diameter of 0.01 µm to 10 µm, and an average thickness of 5 µm to 300 µm.

The electrolyte composition may comprise a non-aqueous organic solvent, a lithium salt, an electrolyte additive, and the like.

The non-aqueous organic solvent is not particularly limited and may be applied as long as it is one used in a non-aqueous electrolyte in the art. For example, as the non-aqueous organic solvent, aprotic organic solvents such as N-methyl-2-pyrrolidinone, ethylene carbonate (EC), propylene carbonate (PC), butylene carbonate, dimethyl carbonate (DMC), diethyl carbonate (DEC), gamma-butyrolactone, 1,2-dimethoxyethane (DME), tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxymethane, sulfolane, methyl sulfolane, 1,3-dimethyl-2-imidazolidinone, ether, methyl propionate (MP), ethyl propionate (EP), and propyl propionate (PP) may be used.

In addition, the non-aqueous organic solvent used in the present disclosure may be used alone as one type, or may be used by mixing two or more types in any combination or ratio according to the intended use. Among these, from the viewpoint of electrochemical stability with respect to oxidation and reduction and chemical stability with respect to reactions with heat or solutes, it is particularly preferable to mix propylene carbonate, ethylene carbonate, fluoroethylene carbonate, diethyl carbonate, dimethyl carbonate, and ethyl methyl carbonate, and the like.

The lithium salt is not particularly limited and may be applied as long as it is one used in a non-aqueous electrolyte in the art. Specifically, the lithium salt may comprise at least one selected from LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, and (FSO₂)₂NLi.

The lower limit of the appropriate concentration range for properly using the lithium salt is 0.5 mol/L or more, specifically 0.7 mol/L or more, and more specifically 0.9 mol/L or more, and the upper limit is 2.5 mol/L or less, specifically 2.0 mol/L or less, and more specifically 1.5 mol/L or less. When the concentration of the lithium salt falls below 0.5 mol/L, there is a risk that the cycle characteristics and power output characteristics of the non-aqueous electrolyte battery may deteriorate due to a decrease in ionic conductivity. In addition, when the concentration of the lithium salt exceeds 2.5 mol/L, the viscosity of the electrolyte solution for the non-aqueous electrolyte battery increases, which may also decrease ionic conductivity and may deteriorate the cycle characteristics and power output characteristics of the non-aqueous electrolyte battery.

In addition, when a large amount of lithium salt is dissolved in a non-aqueous organic solvent at once, the temperature of the electrolyte composition may rise due to the heat of dissolution of the lithium salt. When the temperature of the non-aqueous organic solvent rises significantly due to the heat of dissolution of the lithium salt in this manner, there is a risk that, in the case of a lithium salt containing fluorine, decomposition may be accelerated and hydrogen fluoride (HF) may be generated. Hydrogen fluoride (HF) is undesirable because it causes deterioration of battery performance. Therefore, the temperature at which the lithium salt is dissolved in the non-aqueous organic solvent is not particularly limited, but may be controlled to -20°C to 80°C, and specifically may be controlled to 0°C to 60°C.

The secondary battery according to the present disclosure has the above-described configuration, and thus has the advantage of not only having excellent energy density and power output performance, but also having high safety since it has an outstanding effect of suppressing heat generation of the secondary battery during high-rate charge and discharge.

Hereinafter, the present disclosure will be described in more detail by way of Examples and Comparative Examples.

However, the following Examples and Comparative Examples are merely illustrative of the present disclosure, and the content of the present disclosure is not limited to the following Examples and Comparative Examples.

### Examples 1 to 3 and Comparative Examples 1 to 10. Manufacture of Secondary Battery

### Manufacture of Positive Electrode

LiNi_{0.8}Co_{0.1}Mn_{0.1}O₂ having the form of primary particles as a positive electrode active material and Li₆CoO₄ as a positive electrode additive were prepared, and carbon nanotubes (CNT) and polyvinylidene fluoride (PVdF) were prepared as a conductive material and a binder, respectively. A positive electrode slurry was prepared by mixing 97 wt.% of the prepared positive electrode active material, 1.2 wt.% of the conductive material, and 1.8 wt.% of the binder with N-methylpyrrolidone at a solid content of 50%. At this time, whether or not the positive electrode additive was mixed into the positive electrode slurry was controlled as shown in Table 1 below. In Table 1, the case in which the positive electrode additive was mixed is indicated by "O", and the case in which the positive electrode additive was not mixed is indicated by "X". In addition, when the positive electrode additive was mixed, the contents of the positive electrode active material and the positive electrode additive were controlled to 94 to 96.5 wt.% and 0.5 to 3 wt.%, respectively.

The prepared positive electrode slurry was applied onto an aluminum thin plate (thickness: 12 µm) being transferred by roll-to-roll (transfer speed: 6 m/min) using a die coater, then dried with hot air, and rolled at a speed of 30 to 40 m/min at 50 to 60°C to manufacture a positive electrode.

### Manufacture of Negative Electrode

A mixed graphite prepared by mixing natural graphite (average particle diameter (D₅₀): approximately 11 to 13 µm) and artificial graphite (average particle diameter (D₅₀): approximately 15 to 16 µm) at a weight ratio of 1:1 was prepared as a carbon-based negative electrode active material. Together with this, styrene-butadiene rubber (SBR) as a binder and carboxymethylcellulose (CMC) as a thickener were prepared, and carbon black (Super-P, sphericity: approximately 0.88±0.3) and carbon nanotubes (CNT) were prepared as conductive materials.

Then, a negative electrode slurry was prepared by mixing the carbon-based negative electrode active material, styrene-butadiene rubber (SBR), carboxymethylcellulose (CMC), and a conductive material with water to a solid content of 50%. At this time, i) the type of the conductive material was applied as shown in Table 1 below. In addition, in the negative electrode slurry, the content of styrene-butadiene rubber (SBR) and carboxymethylcellulose (CMC) was fixed at 3.1 wt.% of the total solid content, and the remaining balance was filled with the carbon-based negative electrode active material and the conductive material, and ii) the content of the conductive material was controlled as shown in Table 1 below based on the total solid content.

The prepared negative electrode slurry was applied onto a copper thin plate (thickness: 6 µm) being transferred by roll-to-roll (transfer speed: 6 m/min) using a die coater. The applied negative electrode slurry was dried with hot air in the range of approximately 180±10°C and rolled with a roll press to form a negative electrode active layer on a negative electrode current collector, thereby manufacturing a negative electrode for a secondary battery (average loading amount: approximately 250 mg/25 cm² to 300 mg/25 cm²).

### Measurement of Irreversible Capacity of Positive Electrode and Negative Electrode

The above-described process was performed in the same manner to manufacture the positive electrode and the negative electrode separately.

A positive electrode half-cell was fabricated using the separately prepared positive electrode and lithium metal, and a negative electrode half-cell was fabricated in the same manner using the prepared negative electrode and lithium metal. At this time, a separator made of 14 µm polypropylene, and an electrolyte solution prepared by dissolving LiPF₆ to a concentration of 1 M in an organic solvent comprising ethylene carbonate (EC) and ethyl methyl carbonate (EMC) mixed at a volume ratio of 1:1 were used.

Charge and discharge were performed on each of the fabricated positive electrode half-cell and negative electrode half-cell to measure the charge and discharge capacities. At this time, the charging and discharging were each performed at 22±5°C under a condition of 5.0C, and the irreversible capacity of the positive electrode (X) and the irreversible capacity of the negative electrode (Y) were calculated from the measured charge capacity and discharge capacity. At this time, the irreversible capacity was calculated from the deviation between the charge capacity and the discharge capacity. The ratio (Y/X) of the irreversible capacity of the negative electrode (Y) to the irreversible capacity of the positive electrode (X) was calculated using the calculated results. The results are shown in Table 1 below.

### Assembling of Secondary Battery

A separator made of 14 µm polypropylene was interposed between the previously prepared positive electrode and negative electrode, inserted into a case, and then an electrolyte composition was injected to assemble a 1 Ah-class secondary battery.

Here, as the electrolyte composition, a solution prepared by dissolving LiPF₆ to a concentration of 1 M in an organic solvent comprising ethylene carbonate (EC), dimethyl carbonate (DMC), and ethyl methyl carbonate (EMC) mixed at a volume ratio of 3:4:3 was used.

**[Table 1]**

| | Whether positive electrode additive is mixed | Negative electrode conductive material | | Y/X |
|---|---|---|---|---|
| | | Type | Content | |
| Comparative Example 1 | X | - | - | 1.1 |
| Comparative Example 2 | X | carbon black | 1 wt.% | 1.1 |
| Comparative Example 3 | X | carbon black | 15 wt.% | 1.25 |
| Comparative Example 4 | X | carbon black | 30 wt.% | 1.4 |
| Comparative Example 5 | X | carbon black | 50 wt.% | 1.6 |
| Comparative Example 6 | X | carbon black | 70 wt.% | 1.8 |
| Comparative Example 7 | O | carbon nanotubes | 15 wt.% | 1.4 |
| Comparative Example 8 | O | carbon black | 1 wt.% | 1.3 |
| Comparative Example 9 | O | carbon black | 70 wt.% | 0.6 |
| Comparative Example 10 | O | carbon black | 15 wt.% | 0.7 |
| Example 1 | O | carbon black | 15 wt.% | 1.1 |
| Example 2 | O | carbon black | 30 wt.% | 1.0 |
| Example 3 | O | carbon black | 50 wt.% | 1.0 |

### Examples 4 to 6. Manufacture of Secondary Battery

A secondary battery was manufactured in the same manner as in Example 2, except that LiNi_{0.8}Co_{0.1}Mn_{0.1}O₂ used as the positive electrode active material of the positive electrode was controlled to have the particle form as shown in Table 2 below.

At this time, the particle form of the positive electrode active material was confirmed by acquiring a scanning electron microscope (SEM) image (magnification: approximately 20,000×) of the cross-section of the manufactured positive electrode active layer, and performing image analysis on the acquired image to identify particles not comprising grain boundaries (i.e., primary particles) and particles comprising grain boundaries (i.e., secondary particles). Then, the ratio of primary particles to secondary particles was confirmed by calculating the area ratio of each particle in the entire image.

**[Table 2]**

| | Particle form | Y/X |
|---|---|---|
| Example 4 | primary particle: secondary particle = 90:10 | 1.0 |
| Example 5 | primary particle: secondary particle = 75:25 | 0.95 |
| Example 6 | primary particle: secondary particle = 40:60 | 0.8 |

### Example 7 and Comparative Examples 11 to 12. Manufacture of Secondary Battery

A secondary battery was manufactured in the same manner as in Example 2, except that, as shown in Table 3 below, a mixed graphite prepared by mixing natural graphite (average particle diameter (D₅₀): approximately 11 to 13 µm) and artificial graphite (average particle diameter (D₅₀): approximately 15 to 16 µm) at a weight ratio of 1:1 and silicon oxide (SiO_{q}, where 0.8≤q≤2.5) were used as the negative electrode active material of the negative electrode.

**[Table 3]**

| Based on weight | Negative electrode active material composition | Y/X |
|---|---|---|
| Example 7 | mixed graphite: silicon oxide = 90:10 | 1.1 |
| Comparative Example 11 | mixed graphite: silicon oxide = 55:45 | 1.5 |
| Comparative Example 12 | silicon oxide = 100 | 2.3 |

### Experimental Example 1

The following experiment was performed to evaluate the performance characteristics of the secondary battery according to the present disclosure.

### Evaluation of Energy Density and Power Output Rate

Each of the lithium secondary batteries manufactured in Examples 1 to 7 and Comparative Examples 1 to 12 was charged at 25°C to 4.2 V under CC-CV conditions at a rate of 0.3C, and discharged to 2.5 V under CC conditions at a rate of 0.3C for activation.

Each activated lithium secondary battery was charged at a temperature of 25°C to 4.2 V under CC-CV conditions at a rate of 1.0C, and the discharge capacity was measured for the first time while discharging to 2.5 V under CC conditions at a rate of 0.33C. Subsequently, each discharged secondary battery was again charged at a temperature of 25°C to 4.2 V under CC-CV conditions at a rate of 1.0C, and the discharge capacity was measured for the second time while discharging to 2.5 V under CC conditions at a rate of 5.0C.

From each measured discharge capacity, the ratio of the discharge capacity under CC conditions at 5.0C to the discharge capacity under CC conditions at 0.33C (DC_{5.0C}/DC_{0.33C}) was calculated to obtain the 5C-rate discharge efficiency of each secondary battery.

In addition, from the 5C-rate discharge efficiency, the ratio of the discharge efficiency of Comparative Example 1 to the discharge efficiency of each secondary battery was calculated to determine the rate of increase or decrease in energy density of each secondary battery. The results are shown in Table 4 below.

### Measurement of Heat Generation during High-Rate Discharge

Each of the lithium secondary batteries manufactured in Examples 1 to 7 and Comparative Examples 1 to 12 was charged at 25°C to 4.2 V under CC-CV conditions at a rate of 0.3C, and discharged to 2.5 V under CC conditions at a rate of 0.3C for activation.

Each activated secondary battery was subjected to a total of 300 cycles of charge and discharge, with one cycle defined as charging to 4.2 V under CC-CV conditions at a rate of 1.0C and discharging to 2.5 V under CC conditions at a rate of 5.0C. At this time, a temperature measurement sensor was mounted on the outside of the case of each secondary battery to measure the temperature of the secondary battery during discharge, thereby measuring the maximum heat generation temperature of the secondary battery. From the measured results, the deviation of the maximum heat generation temperature of each secondary battery relative to the maximum heat generation temperature of Comparative Example 1 was calculated, and the results are shown in Table 4 below.

**[Table 4]**

| | Rate of increase/decrease in energy density | 5C discharge efficiency | Maximum heat generation temperature deviation |
|---|---|---|---|
| Comparative Example 1 | - | approximately 65% | - |
| Comparative Example 2 | 100% | approximately 65% | 0°C |
| Comparative Example 3 | 97% | approximately 70% | -5°C |
| Comparative Example 4 | 92% | approximately 75% | -8°C |
| Comparative Example 5 | 88% | approximately 75% | -5°C |
| Comparative Example 6 | 70% | approximately 50% | +12°C |
| Comparative Example 7 | 90% | approximately 80% | +3°C |
| Comparative Example 8 | 85% | approximately 70% | 0°C |
| Comparative Example 9 | 83% | approximately 65% | +10°C |
| Comparative Example 10 | 92% | approximately 60% | +5°C |
| Comparative Example 11 | 115% | approximately 65% | +7°C |
| Comparative Example 12 | 120% | approximately 55% | +15°C |
| Example 1 | 105% | approximately 85% | -8°C |
| Example 2 | 105% | approximately 90% | -10°C |
| Example 3 | 105% | approximately 90% | -10°C |
| Example 4 | 105% | approximately 89% | -10°C |
| Example 5 | 105% | approximately 87% | -8°C |
| Example 6 | 105% | approximately 84% | -6°C |
| Example 7 | 110% | approximately 88% | -6°C |

Referring to Table 4, it can be seen that the secondary battery according to the present disclosure not only has excellent energy density and power output performance, but also has suppressed heat generation during high-rate discharge.

Specifically, it was found that the secondary battery manufactured in the Examples showed an increase in energy density of approximately 5% compared to the secondary battery of Comparative Example 1, which does not comprise a positive electrode additive and a point-type conductive material in the positive electrode and negative electrode, respectively. In addition, it was confirmed that the secondary battery manufactured in the Examples exhibited a high discharge efficiency of approximately 80% or more when discharged at a 5C-rate, and that heat generation of the secondary battery was suppressed during high-rate discharge.

From these results, it can be seen that the secondary battery comprising a negative electrode according to the present disclosure is useful as a secondary battery for Urban Air Mobility (UAM) that requires high energy density and high power output performance and high thermal safety.

### Experimental Example 2.

The following experiment was performed to evaluate the power output performance of the secondary battery according to the present disclosure at a low state of charge (SOC).

Each of the lithium secondary batteries manufactured in Examples 1 to 7 and Comparative Examples 1 to 12 was charged at 25°C to SOC 30% with a constant current of 0.1C, activated, and then degassing was performed.

Then, charging was performed to 4.2 V under a constant current/constant voltage condition of 0.33C, discharging was performed to a state of charge (SOC) of 35% under a constant power condition of approximately 250 W, and then discharging was performed for 18 seconds under a constant power condition of approximately 900 W. Subsequently, the time required to reach the lower limit voltage of 2.5 V while discharging under a constant power condition of approximately 1,100 W was measured. The results are shown in Table 5 below.

**[Table 5]**

| | Time required |
|---|---|
| Comparative Example 1 | approximately 2 seconds |
| Comparative Example 2 | approximately 2 seconds |
| Comparative Example 3 | approximately 4 seconds |
| Comparative Example 4 | approximately 6 seconds |
| Comparative Example 5 | approximately 7 seconds |
| Comparative Example 6 | approximately 3 seconds |
| Comparative Example 7 | approximately 7 seconds |
| Comparative Example 8 | approximately 5 seconds |
| Comparative Example 9 | approximately 6 seconds |
| Comparative Example 10 | approximately 9 seconds |
| Example 1 | approximately 38 seconds |
| Example 2 | approximately 55 seconds |
| Example 3 | approximately 45 seconds |

As shown in Table 5, it can be seen that the secondary battery according to the present disclosure has excellent power output performance even at a low state of charge (SOC) of 35%.

Specifically, it was found that the secondary battery manufactured in the Examples required 10 seconds or more, specifically 30 seconds or more, or 35 seconds or more to reach 2.5 V when discharged at a constant power condition of approximately 1,100 W after being discharged for 18 seconds at a constant power condition of approximately 900 W at a state of charge (SOC) of 35%.

This means that the secondary battery manufactured in the Examples exhibits high power output performance even at a low state of charge (SOC).

From these results, it can be seen that the secondary battery comprising a negative electrode according to the present disclosure is useful as a secondary battery for Urban Air Mobility (UAM) that requires high energy density and high power output performance and high thermal safety.

While the present disclosure has been described with reference to preferred aspects of the present disclosure, it will be understood by those skilled in the art that various modifications and variations can be made therein without departing from the scope of the present disclosure as defined by the appended claims. Therefore, the scope of the present disclosure should not be limited by the detailed description of the specification but should be determined by the appended claims.

## Claims

1. A secondary battery, comprising:
a positive electrode;
a negative electrode; and
a separator disposed between the positive electrode and the negative electrode,
wherein the positive electrode comprises a positive electrode active layer comprising a positive electrode active material and a positive electrode additive on a positive electrode current collector,
wherein the negative electrode comprises a negative electrode active layer comprising a negative electrode active material and a point-type conductive material on a negative electrode current collector, and
wherein, when charge and discharge are performed at 22±5°C and 5C-rate, a ratio of an irreversible capacity of the negative electrode to an irreversible capacity of the positive electrode ranges from 0.8 to 1.2.

2. The secondary battery of claim 1, wherein, when the charge and discharge are performed at 22±5°C and 5C-rate, the ratio of the irreversible capacity of the negative electrode to the irreversible capacity of the positive electrode ranges from 0.9 to 1.15.

3. The secondary battery of claim 1, wherein a content of the point-type conductive material is in a range of 10 wt.% to 60 wt.% based on a total weight of the negative electrode active layer.

4. The secondary battery of claim 1, wherein the point-type conductive material comprises acetylene black, oil furnace black, channel black, lamp black, thermal black, or a mixture thereof.

5. The secondary battery of claim 1, wherein an average particle diameter (D₅₀) of the point-type conductive material is in a range of 0.5 µm to 20 µm.

6. The secondary battery of claim 1, wherein the negative electrode active material is a carbon-based negative electrode active material comprising natural graphite, artificial graphite, Kish graphite, pyrolytic carbon, carbon microbeads, mesophase pitch, graphitized coke, or a mixture thereof.

7. The secondary battery of claim 1, wherein the negative electrode active material is at least one silicon-based negative electrode active material selected from silicon (Si), silicon carbide (SiC), and silicon oxide (SiO_{q}) wherein 0.8≤q≤2.5.

8. The secondary battery of claim 1, wherein the positive electrode active material comprises at least one lithium metal oxide represented by the following Chemical Formulas 1 and 2:
[Chemical Formula 1] Liₐ[Ni_{b}Co_{1-b-c}M¹_{c}]O₂
[Chemical Formula 2] Liₚ[Mn_{2-q}M²_{q}]O₄
wherein:
M¹ is at least one element selected from W, Cu, Fe, V, Cr, Mn, Al, Mg, Ca, Ti, Zr, Zn, In, Ta, Y, La, Sr, Ga, Sc, Gd, Sm, Ce, Nb, B, and Mo,
M² is at least one element selected from W, Cu, Fe, V, Cr, Ni, Al, Mg, Ca, Ti, Zr, Zn, In, Ta, Y, La, Sr, Ga, Sc, Gd, Sm, Ce, Nb, B, and Mo, and
a, b, c, p, and q satisfy 1.0≤a≤1.30, 0≤b<1, 0≤c≤0.4, 1.0≤p≤1.30, and 0≤q≤1.0, respectively.

9. The secondary battery of claim 1, wherein the positive electrode active material comprises at least one of primary particles or secondary particles in which the primary particles are agglomerated.

10. The secondary battery of claim 1, wherein the positive electrode additive comprises at least one compound represented by the following Chemical Formula 3 to Chemical Formula 5:
[Chemical Formula 3] LiₘM³₍₁₋ₙ₎M⁴ₙO₄
[Chemical Formula 4] Li₂M⁵₍₁₋ᵣ₎M⁶ᵣO₂
[Chemical Formula 5] Li₂R_{z}
wherein:
M³ is Fe, Co, Mn, Zn, Al, or Ga,
M⁴ is at least one metal selected from W, Cu, Fe, V, Cr, Ti, Zr, Zn, Co, Al, In, Ta, Y, La, Sr, Ga, Sc, Gd, Sm, Ca, Ce, Nb, Mg, B, and Mo, provided that M³ and M⁴ comprise mutually different metals,
M⁵ is Ni or Cu,
M⁶ is at least one metal selected from W, Cu, Fe, V, Cr, Ti, Zr, Zn, Co, Al, In, Ta, Y, La, Sr, Ga, Sc, Gd, Sm, Ca, Ce, Nb, Mg, B, and Mo, provided that M⁵ and M⁶ comprise mutually different metals,
R is O, S, or Se, and
m, n, r, and z satisfy 4≤m≤7, 0≤n≤0.5, 0<r≤0.5, and 0.8≤z≤2.5, respectively.

11. The secondary battery of claim 10, wherein the positive electrode additive comprises at least one compound selected from Li₅FeO₄, Li₆MnO₄, Li₆CoO₄, Li₆ZnO₄, Li₅AlO₄, Li₅GaO₄, Li₂NiO₂, Li₂CuO₂, Li₂O, Li₂O₂, Li₂S, or Li₂Se.

12. The secondary battery of claim 1, wherein a content of the positive electrode additive is in a range of 0.1 wt.% to 5 wt.% based on a total weight of the positive electrode active layer.
